# EUROPÄISCHE PATENTSCHRIFT

(11) **EP 0 920 977 B1**
(45) Veröffentlichungstag und Bekanntmachung des Hinweises auf die Patenterteilung: **11.10.2000**
(21) Anmeldenummer: 98120266.6
(22) Anmeldetag: 27.10.1998
(51) Int. Cl.: B29C 65/08, B26D 7/08, B23K 20/10

(54) **Vorrichtung zum Bearbeiten einer Materialbahn**
Apparatus for machining a web
Dispositif pour usiner une bande de matière

(30) Priorität: 04.12.1997 DE 19753740
(43) Veröffentlichungstag der Anmeldung: 09.06.1999
(73) Patentinhaber: Herrmann Ultraschalltechnik GmbH & Co. KG, 76307 Karlsbad-Ittersbach (DE)
(72) Erfinder: Gnad, Gerhard, 75210 Keltern (DE); Rau, Stefan, 76307 Karlsbad (DE); Vogler, Ulrich, 76185 Karlsruhe (DE)
(74) Vertreter: Dreiss, Fuhlendorf, Steimle & Becker

(56) Entgegenhaltungen:
- DE-A- 3 410 954
- DE-A- 4 439 284
- DE-C- 19 526 354
- US-A- 3 534 442
- US-A- 4 048 004
- US-A- 4 854 494

## Beschreibung

Die Erfindung betrifft eine Vorrichtung zum Bearbeiten einer Materialbahn mit einer eine Sonotrode aufweisenden Ultraschalleinheit und einem Gegenwerkzeug, wobei die Materialbahn durch einen Spalt zwischen der Sonotrode und dem Gegenwerkzeug geführt und von der Sonotrode bearbeitet wird, wobei die Sonotrode in einem Schlitten eingespannt ist und der Schlitten über eine Verstelleinrichtung bezüglich dem Gegenwerkzeug verstellbar ist, mit einem Sensor, der mit einer Steuer- oder Regeleinrichtung verbunden ist, die abhängig vom Signal des Sensors eine Änderung des Abstandes des Schlittens zum Gegenwerkzeug bewirkt.

Zusätzlich zu Rotationsstanz- und -schneidwalzen, mit denen endlose Materialbahnen bearbeitet werden, werden in zunehmendem Maße Ultraschall-Sonotroden verwendet, mit denen die Materialbahn verbunden, geschnitten, perforiert, gestanzt, geprägt, wärmebehandelt oder auf ähnliche Weise bearbeitet wird. Entscheidend ist sowohl bei den herkömmlichen Stanz- und Schneidwalzen als auch bei den Sonotroden, daß der Spalt zwischen der Spitze des Bearbeitungswerkzeugs und dem Gegenwerkzeug, welches eine sich drehende Walze oder eine ebene Fläche sein kann, eine konstante Höhe aufweist. Durch diesen Spalt wird die zu bearbeitende Materialbahn, die auch aus mehreren Schichten bestehen kann, hindurchgeführt. Aufgrund der bei der Bearbeitung entstehenden Wärme ändert sich die Länge des Bearbeitungswerkzeugs, zum Beispiel der Sonotrode, was zu einer Änderung der Spalthöhe führen kann. Ein zu enger Spalt führt jedoch in der Regel zu einer Verschlechterung der Materialbearbeitung und kann unter Umständen in einer Beschädigung der Materialbahn oder der Werkzeuge resultieren. Ein zu weiter Spalt ergibt eine nicht akzeptable Siegelqualität oder Schneidqualität. Es wird daher angestrebt, den Spalt möglichst konstant zu halten.

Aus der DE 44 39 284 A1 ist eine Vorrichtung zum fortlaufenden Ultraschallbearbeiten einer Materialbahn bekannt geworden, bei der der Schweißspalt über eine Verstelleinrichtung verstellt werden kann. Es wird vorgeschlagen, die Verstelleinrichtung als Piezoaktoator auszugestalten. Mit derartigen Piezoaktoatoren kann der Schneidspalt zwar hochgenau eingestellt werden, jedoch sind große Spaltenänderungen kaum möglich.

Aus der DE 195 26 354 C1 ist eine Vorrichtung zum Ultraschallbearbeiten eines Materials mittels einer Sonotrode bekannt. Diese Vorrichtung weist einen Sensor auf, mit welchem der Abstand der Sonotrode zum Gegenwerkzeug gemessen werden kann. Auf diese Weise wird über das Signal der Sonotrode der Spaltabstand eingestellt.

Der Erfindung liegt die Aufgabe zugrunde, eine Vorrichtung der eingangs genannten Art so weiterzubilden, dass mit ihr ein weitestgehend konstanter Spalt für die Bearbeitung der Materialbahn aufrecht erhalten wird, wobei sich die Vorrichtung relativ schnell auf sich ändernde Material- und/oder Bearbeitungsparameter einstellt.

Diese Aufgabe wird erfindungsgemäß bei einer Vorrichtung der eingangs genannten Art dadurch gelöst, dass der Sensor ein Kraftsensor ist und über dem Sensor eine die Sonotrode in Richtung des Gegenwerkzeugs beaufschlagende Kraft messbar ist.

Die erfindungsgemäße Vorrichtung besitzt den wesentlichen Vorteil, dass über eine Kraftmessung die Anpresskraft der Sonotrode direkt oder indirekt ermittelt werden kann und dass bei einer Änderung dieser Kraft die Sonotrode in Richtung auf das Gegenwerkzeug bzw. weg von diesem verlagert werden kann. Die optimale Anpresskraft wird durch Versuche ermittelt und der dazugehörige Messwert des Sensors als Ist-Wert in der Steuer- oder Regeleinrichtung abgespeichert. Verändert sich nun während des Betriebs der Vorrichtung die durch den Sensor erfasste Kraft, so ändert sich der Messwert des Sensors, wobei dieser Wert als Steuergröße für die Steuer- oder Regeleinrichtung verwendet wird. Abhängig von diesem geänderten Messwert wird die Lage der Sonotrode derart verändert, dass diese wieder mit der gleichen Anpresskraft an der Materialbahn anliegt. Auf diese Weise ist eine einfache, preiswerte und vor allem schnelle Nachregelung möglich.

Eine Weiterbildung der Erfindung sieht vor, dass ein Kniehebelsystem vorgesehen ist, über welches die Sonotrode in Richtung des Gegenwerkzeugs mit einer Anpresskraft beaufschlagbar ist. Über dieses Kniehebelsystem kann die Sonotrode relativ einfach in Richtung auf das Gegenwerkzeug zugestellt werden bzw. von diesem entfernt werden. Außerdem können relativ hohe Kräfte erzeugt werden, wobei die Stellkraft relativ niedrig sein kann. Ferner kann die Anpresskraft über das Kniehebelsystem sehr fein dosiert werden. Da der Kniehebel in gestrecktem oder nahezu gestrecktem Zustand sehr steif ist, sind die Rückstellkräfte auf die Sonotrode bei auftretenden Materailverdickungen sehr hoch, so dass der Spalt zwischen der Sonotrode und dem Gegenwerkzeug konstant gehalten werden kann.

Vorteilhaft ist der Sensor im oder am Kniehebelsystem bzw. in oder an einem Kniehebelarm vorgesehen. Durch die Veränderung der Lage des Kniegelenkes des Kniehebelsystems werden die Kräfte innerhalb des Kniehebelsystems, insbesondere innerhalb des Kniehebelarms verändert, was mit dem Sensor festgestellt werden kann. Außerdem ändern sich die Kräfte innerhalb des Kniehebelsystems, wenn sich die Höhe des Bearbeitungsspaltes ändert bzw. wenn sich die Parameter des zu bearbeitenden Materials ändern.

Mit Vorzug ist der Sensor in oder an dem von der Sonotrode abgewandten Kniehebelarm angeordnet. Hierdurch wird der Vorteil erzielt, dass die Schwingungen der Sonotrode nahezu vollständig über das Kniehebelsystems abgedämpft werden und der Sensor nur noch minimal von diesen Schwingungen beeinflusst wird.

Bei Ausführungsformen ist vorgesehen, dass der Sensor ein Dehnmessstreifen, ein Piezoelement oder eine Kraftmessdose ist. Insbesondere die Ausgestaltung des Sensors als Dehnmessstreifen hat den wesentlichen Vorteil, dass zum einen das Gewicht des Sensors vernachlässigbar gering ist, zum anderen die im Kniehebelsystem, insbesondere am Kniehebelarm auftretenden Kräfte sehr exakt und ohne Zeitverzögerung gemessen werden können und die Messgröße direkt bzw. gegebenenfalls unter Zwischenschaltung eines Verstärkers als Stellgröße in der Steuer- oder Regeleinrichtung verwendet werden kann.

Eine einfache und präzise Veränderung der Anspresskraft wird dadurch erreicht, dass die Steuer- oder Regeleinrichtung einen auf das Kniegelenk des Kniehebelsystems einwirkenden Schrittmotor aufweist. Ein derartiger Schrittmotor kann sehr feinfühlig auf das Kniehebelsystem einwirken und die Anpresskraft der Sonotrode auf die Materialbahn verändern.

Weitere Vorteile, Merkmale und Einzelheiten der Erfindung ergeben sich aus den Unteransprüchen sowie aus der nachfolgenden Beschreibung, in der unter Bezugnahme auf die Zeichnung ein besonders bevorzugtes Ausführungsbeispiel im einzelnen beschrieben ist. Dabei können die in der Zeichnung dargestellten sowie in den Ansprüchen und in der Beschreibung erwähnten Merkmale jeweils einzeln für sich oder in beliebiger Kombination erfindungswesentlich sein. In den Zeichnungen zeigen:
- Figur 1: eine Seitenansicht der erfindungsgemäßen Vorrichtung, teilweise geschnitten; und
- Figur 2: eine vergrößerte Wiedergabe des mit II bezeichneten Bauteils gemäß Figur 1.

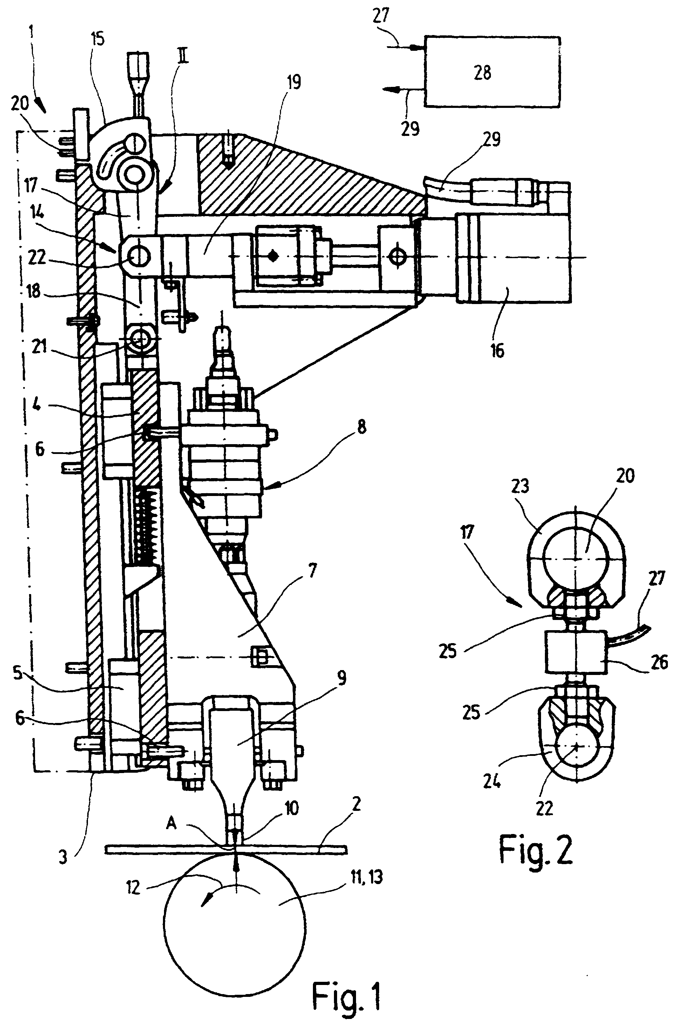

In der Figur 1 ist eine insgesamt mit 1 bezeichnete Vorrichtung zum Ultraschallsschweißen einer Materialbahn 2 dargestellt. Diese Vorrichtung 1 weist einen Ständer 3 auf, der ortsfest ist. An diesem Ständer 3 ist ein Schlitten 4 derart befestigt, dass er in vertikaler Richtung verschoben werden kann. Hierfür sind geeignete Längsführungen 5 und Lager vorgesehen. Am Schlitten 4 ist über eine Steckverbindung 6 ein Träger 7 befestigt, in welchem eine Ultraschalleinheit 8 angeordnet ist. Diese Ultraschalleinheit 8 weist eine Sonotrode 9 auf, deren Sonotrodenspitze 10 in Richtung auf ein Gegenwerkzeug 11, in der Figur 1 eine in Richtung des Pfeils 12 angetriebene Walze 13 zeigt. Zwischen der Sonotrodenspitze 10 und der Walze 13 befindet sich die zu bearbeitende Materialbahn 2. Der Abstand der freien Stirnseite der Sonotrodenspitze 10 und der Walze 13 ist in der Figur 1 mit A bezeichnet.

Der Schlitten 4 ist außerdem über ein Kniehebelsystem 14 mit einer Stelleinrichtung 15 des Ständers 3 verbunden. Mittels der Stelleinrichtung 15 kann die Lage des Schlittens 4 bezüglich des Ständers 3, dass heißt die vertikale Position des Schlittens 4 so eingestellt werden, dass der Abstand A zwischen der Sonotrodenspitze und der Walze 13 einen bestimmten Wert einnimmt. Diese vertikale Position des Schlittens 4 kann aber zusätzlich zur Stelleinrichtung 15 auch durch einen Schrittmotor 16 verändert werden, welcher auf das Kniehebelsystem 14 einwirkt.

Das Kniehebelsystem 14 weist zwei Kniehebelarme 17 und 18 sowie eine Kniehebelstange 19 auf. Der Kniehebelarm 17 ist über ein Schwenklager 20 mit der Stelleinrichtung 15 und der Kniebelarm 18 ist über ein Schwenklager 21 mit dem Schlitten 4 verbunden. Außerdem sind die beiden Kniehebelarme 17 und 18 sowie die Kniebelstange 19 über ein Kniegelenk 22 miteinander verbunden. Über den Schrittmotor 16 ist die Kniehebelstange 19 in Richtung auf das Kniegelenk 22, d.h. im wesentlichen orthogonal zur Längsachse der beiden Kniehebelarme 17 und 18, sowie weg vom Kniegelenk 22 verlagerbar.

Durch Betätigen des Schrittmotores 16 kann also das Kniehebelsystem 14 verändert werden, wodurch der Abstand der beiden Schwenklager 20 und 21 verändert und dadurch der Schlitten 4 bezüglich des Ständers 3 verschoben und dadurch der Abstand A verändert werden kann.

In der Figur 2 ist der Kniehebelarm 17 vergrößert wiedergegeben. Das Schwenklager 20 sowie das Kniegelenkt 22 befinden sich in Lageraugen 23 und 24, in welche Nippel 25 eingeschraubt sind. Die beiden Nippel 25 sind ihrerseits über einen Kraftsensor 26 miteinander verbunden. Dieser Kraftsensor 26 kann von einem Dehnmessstreifen, einem Piezoelement, einer Kraftmessdose oder einem ähnlichen Element gebildet werden. Dabei kann die Kraft direkt oder indirekt gemessen werden. Mittels dieses Kraftsensors ist die in Längsrichtung des Kniehebelarms 17 wirkende Kraft direkt ermittelbar. Dieser Messwert wird über eine Leitung 27 einer Steuer- oder Regeleinrichtung 28 zugeführt, die ihrerseits ein Signal für den Schrittmotor 16 über eine Leitung 29 ausgibt.

Weist der Abstand A einen korrekten Wert auf, dann liegt die Sonotrodenspitze 10 mit einer bestimmten Kraft auf der Materialbahn 2 auf. Der Kraftsensor 26 ermittelt eine bestimmte Druckkraft im Kniebelsystem 14 bzw. im Kniehebelarm 17 und gibt einen Messwert als Soll-Wert an die Steuer- oder Regeleinrichtung 28 ab. Ändert sich der Abstand A, dann verändert sich die Kraft im Kniehebelarm 17 und somit der Messwert des Kraftsensors 26. Die Steuer- oder Regeleinrichtung 28 steuert aufgrund dieser Messwertänderung den Schrittmotor 16 an, wodurch die Kniehebelstange 19 derart verlagert wird, dass über das Kniehebelsystem 14 der Schlitten 4 derart verlagert wird, dass dieser Kraftänderung an der Sonotrodenspitze 10 entgegengewirkt wird. Sobald der Kraftsensor 26 eine dem Referenzwert entsprechende Kraft misst, wird der Schrittmotor 16 in der auch in augenblicklichen Position angehalten.

Auf diese Weise ist der Abstand A bzw. die Spalthöhe an der Sonotrodenspitze 10 auf den optimalen Wert einstellbar, so dass auf die Materialbahn 2 permanent eine gleichbleibende Anpresskraft einwirkt.

## Patentansprüche

1. Vorrichtung zum Bearbeiten einer Materialbahn (2) mit einer eine Sonotrode (9) aufweisenden Ultraschalleinheit (8) und einem Gegenwerkzeug (11), wobei die Materialbahn (2) durch einen Spalt zwischen der Sonotrode (9) und dem Gegenwerkzeug (11) geführt und von der Sonotrode (9) bearbeitet wird, wobei die Sonotrode (9) in einem Schlitten (4) eingespannt ist und der Schlitten (4) über eine Verstelleinrichtung bezüglich dem Gegenwerkzeug (11) verstellbar ist, mit einem Sensor (26), der mit einer Steuer- oder Regeleinrichtung (28) verbunden ist, die abhängig vom Signal des Sensors (26) eine Änderung des Abstands (A) der Sonotrode (9) zum Gegenwerkzeug (11) bewirkt , **dadurch gekennzeichnet,** dass der Sensor ein Kraftsensor (26) ist und über den Sensor (26) eine die Sonotrode (9) in Richtung des Gegenwerkzeugs (11) beaufschlagende Kraft messbar ist.

2. Vorrichtung nach Anspruch 1, dadurch gekennzeichnet, dass ein Kniehebelsystem (14) vorgesehen ist, über welches die Sonotrode (9) in Richtung des Gegenwerkzeugs (11) mit einer Anpresskraft beaufschlagbar ist.

3. Vorrichtung nach Anspruch 2, dadurch gekennzeichnet, dass der Sensor (26) in oder am Kniehebelsystem (14) angeordnet ist.

4. Vorrichtung nach Anspruch 2 oder 3, dadurch gekennzeichnet, dass der Sensor (26) in oder an einem Kniehebelarm (17) vorgesehen ist.

5. Vorrichtung nach Anspruch 4, dadurch gekennzeichnet, dass der Sensor (26) in oder an dem von der Sonotrode (9) abgewandten Kniehebelarm (17) angeordnet ist.

6. Vorrichtung nach einem der vorhergehenden Ansprüche, dadurch gekennzeichnet, dass der Sensor ein Dehnmessstreifen, ein Piezoelement, eine Kraftmessdose oder ein ähnliches, direkt oder indirekt messendes Element ist.

7. Vorrichtung nach einem der vorhergehenden Ansprüche, dadurch gekennzeichnet, dass die Steuer- oder Regeleinrichtung (28) einen auf das Kniegelenk (22) des Kniehebelsystems (14) einwirkenden Schrittmotor (16) aufweist.

## Claims

1. Apparatus for machining a material web (2), with an ultrasonic unit (8) having a sonotrode (9) and with a counterstay tool (11), the material web (2) being led through a nip between the sonotrode (9) and the counterstay tool (11) and being machined by the sonotrode (9), the sonotrode (9) being clamped in a slide (4) and the slide (4) being adjustable in relation to the counterstay tool (11) via an adjusting device, with a sensor (26) connected to a control or regulating device (28) which brings about a change in the clearance (A) between the sonotrode (9) and the counterstay tool (11), as a function of the signal from the sensor (26), characterized in that the sensor is a force sensor (26) and a force acting on the sonotrode (9) in the direction of the counterstay tool (11) can be measured via the sensor (26) .

2. Apparatus according to Claim 1, characterized in that a toggle lever system (14) is provided, via which a pressure force can act on the sonotrode (9) in the direction of the counterstay tool (11).

3. Apparatus according to Claim 2, characterized in that the sensor (26) is arranged in or on the toggle lever system (14).

4. Apparatus according to Claim 2 or 3, characterized in that the sensor (26) is provided in or on a toggle lever arm (17).

5. Apparatus according to Claim 4, characterized in that the sensor (26) is arranged in or on the toggle lever arm (17) facing away from the sonotrode (9).

6. Apparatus according to one of the preceding claims, characterized in that the sensor is a wire strain gauge, a piezoelectric element, a load cell or a similar directly or indirectly measuring element.

7. Apparatus according to one of the preceding claims, characterized in that the control or regulating device (28) has a stepping motor (16) acting on the toggle joint (22) of the toggle lever system (14).

## Revendications

1. Dispositif pour usiner une bande de matière (2), doté d'une unité à ultrasons (8) comportant une sonotrode (9) et d'un contre-outil (11), la bande de matière (2) étant guidée à travers un interstice entre la sonotrode (9) et le contre-outil (11), où elle est usinée par la sonotrode (9), et la sonotrode (9) étant montée sur un chariot (4) apte à être déplacé par rapport au contre-outil (11) au moyen d'un dispositif de réglage, le dispositif étant également doté d'un capteur (26) relié à un dispositif de commande ou de réglage (28), qui commande une variation de la distance (A) entre la sonotrode (9) et le contre-outil (11) en réponse au signal du capteur (26), caractérisé en ce que le capteur est un capteur de force (26) et en ce que le capteur (26) permet de mesurer la force appliquée à la sonotrode (9) en direction du contre-outil (11).

2. Dispositif selon la revendication 1, caractérisé en ce qu'il est prévu un système de levier à genouillère (14) permettant d'exercer sur la sonotrode (9) une force de pression orientée en direction du contre-outil (11).

3. Dispositif selon la revendication 2, caractérisé en ce que le capteur (26) est agencé dans ou sur le système de levier à genouillère (14).

4. Dispositif selon la revendication 2 ou 3, caractérisé en ce que le capteur (26) est prévu dans ou sur un bras de levier à genouillère (17).

5. Dispositif selon la revendication 4, caractérisé en ce que le capteur (26) est agencé dans ou sur le bras de levier à genouillère (17) qui se trouve à l'opposé de la sonotrode (9).

6. Dispositif selon l'une des revendications précédentes, caractérisé en ce que le capteur est une jauge de contrainte, un élément piézo-électrique, une boîte dynamométrique ou un autre élément similaire effectuant des mesures directes ou indirectes.

7. Dispositif selon l'une des revendications précédentes, caractérisé en ce que le dispositif de commande ou de réglage (28) comporte un moteur pas à pas agissant sur la genouillère (22) du système de levier à genouillère (14).
